# EUROPEAN PATENT APPLICATION

(11) **EP 4 712 601 A1**
(43) Date of publication of application: **18.03.2026**
(21) Application number: 24806383.6
(22) Date of filing: 06.05.2024
(51) Int. Cl.: H04W 60/00

(54) **LOCAL SERVICE COMMUNICATION METHOD, AND TERMINAL AND NETWORK-SIDE DEVICE**

(30) Priority: 12.05.2023 CN 202310542758
(71) Applicant: Vivo Mobile Communication Co., Ltd., Dongguan, Guangdong 523863 (CN)
(72) Inventor: WANG, Hui, Dongguan, Guangdong 523863 (CN); KANG, Yanchao, Dongguan, Guangdong 523863 (CN)
(74) Representative: Walaski, Jan Filip
(86) International application number: PCT/CN2024/091127
(87) International publication number: WO 2024/235027

(57) **Abstract**

The embodiments of the present application belongs to the technical field of communications. Disclosed are a local service communication method, and a terminal and a network-side device. The local service communication method in the embodiments of the present application comprises: a terminal sending a first message, wherein the first message is used for requesting for a local service; the terminal receiving a rejection message, wherein the rejection message is used for indicating that the request for the local service is rejected; and the terminal executing non-public network selection; or the terminal turning on a first backoff timer, wherein the terminal does not send the first message during the operation of the first backoff timer, and the value of the first backoff timer is determined on the basis of a valid time of a network that provides the local service.

## Description

### CROSS-REFERENCE TO RELATED APPLICATIONS

This application claims priority to Chinese Patent Application No. 2023105427587, filed on China on May 12, 2023 and entitled "COMMUNICATION METHOD FOR LOCALIZED SERVICE, TERMINAL, AND NETWORK-SIDE DEVICE", which is incorporated herein by reference in its entirety.

### TECHNICAL FIELD

This application relates to the field of communication technologies, and in particular, to a communication method for a localized service, a terminal, and a network-side device.

### BACKGROUND

Currently, research is being conducted on how to provide access to a localized service for a terminal. The localized service may be localized (namely, provided in a specific area or a limited area), and may be limited in time. Providing access to the localized service creates new opportunities for a user and a service provider. For example, access may be provided in a region that is not covered by another network (for example, in a cargo ship at sea), or access and the localized service may be established based on a requirement (on a short-term basis), without requiring a long-term service relationship, permanent installed equipment, and the like. To enable a terminal to access a network providing the localized service and use the localized service, a home network provides network selection information for the terminal. The network selection information includes validity information (including time validity information) and location assistance information. When selecting the network providing the localized service, a user equipment (User Equipment, UE) determines whether the validity information is satisfied, and the terminal may use the localized service only in a period in which the validity information is satisfied.

Considering a characteristic that the localized service is valid in the specific or limited area and at a validity time, the following scenario may occur. A plurality of terminals request to access a hosting (hosting) network and use the localized service at a same time and at a same location, causing a significant increase in signaling load of the network. In this case, signaling requests of some terminals may be rejected by the network. According to a related technical process, the network assigns a back-off timer to the terminal in a non-access stratum (Non-Access Stratum, NAS) signaling reject message, and the terminal starts the back-off timer and cannot initiate any NAS signaling request when the back-off timer is running. Because the terminal rejected by the network cannot initiate any NAS signaling request within a relatively long time, the terminal cannot access the network providing the localized service within the validity time of the localized service. In other words, the terminal cannot use the localized service, affecting communication performance of the terminal.

### SUMMARY

Embodiments of this application provide a communication method for a localized service, a terminal, and a network-side device, to resolve a problem that a terminal that is rejected by a network to provide a localized service cannot initiate any NAS signaling request within a relatively long time. Consequently, the terminal cannot access the network providing the localized service within a validity time of the localized service. In other words, the terminal cannot use the localized service, affecting communication performance of the terminal.

According to a first aspect, a communication method for a localized service is provided, including: A terminal sends a first message. The first message is used to request a localized service. The terminal receives a reject message. The reject message is used to indicate that a request for the localized service is rejected. The terminal performs non-public network selection, or the terminal starts a first back-off timer. The terminal does not send the first message when the first back-off timer is running. A value of the first back-off timer is determined based on a validity time of a network that provides the localized service.

According to a second aspect, a communication method for a localized service is provided, including: A network-side device receives a first message. The first message is used to request a localized service. The network-side device sends a reject message. The reject message is used to indicate that a request for the localized service is rejected. The reject message is used to indicate a value of a second back-off timer. The second back-off timer is configured to indicate performing of non-public network selection when a validity time of a current network providing the localized service is less than a value of the second back-off timer; or the reject message is used to indicate a value of a first back-off timer. A terminal is not allowed to send the first message when the first back-off timer is running. The value of the first back-off timer is determined based on a validity time of a network that provides the localized service.

According to a third aspect, a communication apparatus for a localized service is provided, including: a sending module, configured to send a first message, where the first message is used to request a localized service; a receiving module, configured to receive a reject message, where the reject message is used to indicate that a request for the localized service is rejected; and a processing module, configured to perform non-public network selection, or start a first back-off timer, where the apparatus does not send the first message when the first back-off timer is running, and a value of the first back-off timer is determined based on a validity time of a network that provides the localized service.

According to a fourth aspect, a communication apparatus for a localized service is provided, including: a receiving module, configured to receive a first message, where the first message is used to request a localized service; and a sending module, configured to send a reject message, where the reject message is used to indicate that a request for the localized service is rejected; and the reject message is used to indicate a value of a second back-off timer, and the second back-off timer is configured to indicate performing of non-public network selection when a validity time of a current network providing the localized service is less than a value of the second back-off timer; or the reject message is used to indicate a value of a first back-off timer, a terminal is not allowed to send the first message when the first back-off timer is running, and the value of the first back-off timer is determined based on a validity time of a network that provides the localized service.

According to a fifth aspect, a terminal is provided. The terminal includes a processor and a memory. The memory stores a program or an instruction executable in the processor. The program or the instruction, when executed by the processor, implements the steps of the method in the first aspect.

According to a sixth aspect, a terminal is provided, including a processor and a communication interface. The communication interface is configured to: send a first message, where the first message is used to request a localized service; and receive a reject message, where the reject message is used to indicate that a request for the localized service is rejected. The processor is configured to perform non-public network selection; or start a first back-off timer, where the apparatus does not send the first message when the first back-off timer is running, and a value of the first back-off timer is determined based on a validity time of a network that provides the localized service.

According to a seventh aspect, a network-side device is provided. The network-side device includes a processor and a memory. The memory stores a program or an instruction executable in the processor. The program or the instruction, when executed by the processor, implements the steps of the method in the second aspect.

According to an eighth aspect, a network-side device is provided, including a processor and a communication interface. The communication interface is configured to receive a first message, where the first message is used to request a localized service; and send a reject message, where the reject message is used to indicate that the request of the localized service is rejected, and the reject message is used to indicate a value of a second back-off timer. The second back-off timer is configured to indicate performing of non-public network selection when a validity time of a current network providing the localized service is less than a value of the second back-off timer; or the reject message is used to indicate a value of a first back-off timer, a terminal is not allowed to send the first message when the first back-off timer is running, and the value of the first back-off timer is determined based on a validity time of a network that provides the localized service.

According to a ninth aspect, a readable storage medium is provided. The readable storage medium stores a program or an instruction. The program or the instruction, when executed by a processor, implement the steps of the method in the first aspect or implement the steps of the method in the second aspect.

According to a tenth aspect, a wireless communication system is provided, including a terminal and a network-side device. The terminal may be configured to perform the steps of the method in the first aspect, and the network-side device may be configured to perform the steps of the method in the second aspect.

According to an eleventh aspect, a chip is provided. The chip includes a processor and a communication interface. The communication interface is coupled to the processor. The processor is configured to run a program or an instruction to implement the steps of the method in the first aspect, or implement the steps of the method in the second aspect.

According to a twelfth aspect, a computer program/program product is provided. The computer program/program product is stored in a storage medium. The computer program/program product is executed by at least one processor to implement the steps of the method in the first aspect, or implement the steps of the method in the second aspect.

In embodiments of this application, when the request of the localized service is rejected, the terminal may perform the non-public network selection, to prevent the terminal from being incapable of initiating any NAS signaling request within a relatively long time to affect communication, thereby improving communication performance of the terminal. Alternatively, the terminal starts the first back-off timer. Because the value of the first back-off timer is determined based on the validity time of the network providing the localized service, it is avoided that the terminal cannot initiate any NAS signaling request within a relatively long time to affect communication, thereby improving communication performance of the terminal.

### BRIEF DESCRIPTION OF THE DRAWINGS

FIG. 1 is a schematic diagram of a wireless communication system according to an embodiment of this application;
FIG. 2 is a schematic flowchart of a communication method for a localized service according to an embodiment of this application;
FIG. 3 is a schematic flowchart of a communication method for a localized service according to an embodiment of this application;
FIG. 4 is a schematic flowchart of a communication method for a localized service according to an embodiment of this application;
FIG. 5 is a schematic flowchart of a communication method for a localized service according to an embodiment of this application;
FIG. 6 is a schematic flowchart of a communication method for a localized service according to an embodiment of this application;
FIG. 7 is a schematic structural diagram of a communication apparatus for a localized service according to an embodiment of this application;
FIG. 8 is a schematic structural diagram of a communication apparatus for a localized service according to an embodiment of this application;
FIG. 9 is a schematic structural diagram of a communication device according to an embodiment of this application;
FIG. 10 is a schematic structural diagram of a terminal according to an embodiment of this application; and
FIG. 11 is a schematic structural diagram of a network-side device according to an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used to distinguish between similar objects rather than describe a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" encompasses three solutions: solution I: A is included but B is not included; solution II: B is included but A is not included; and solution III: both A and B are included. A character "/" generally indicates an "or" relationship between associated objects.

A term "indication" in this application may be a direct indication (or an explicit indication) or an indirect indication (or an implicit indication). The direct instruction may be understood as that a sending party clearly informs a receiving party of specific information, an operation to be performed, or a request result in the sent instruction. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. Nevertheless, the technologies may also be applied to a system other than the NR system, such as a 6^{th} generation (6^{th} Generation, 6G) communication system.

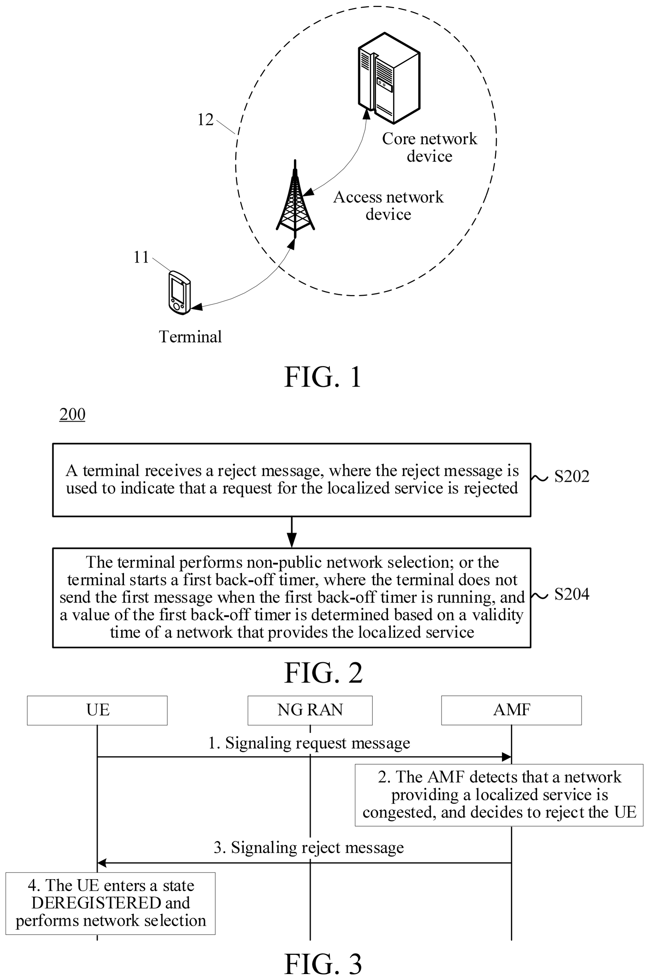

FIG. 1 is a block diagram showing a wireless communication system to which an embodiment of this application may be applied. The wireless communication system includes a terminal 11 and a network-side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the terminal 11 is not limited in embodiments of this application. The network-side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

The core network device may include the core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example, and a specific type of the core network device is not limited. The core network device is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example, and a specific type of the core network device is not limited.

A communication method for a localized service provided in embodiments of this application is described in detail below through some embodiments and application scenarios thereof with reference to the accompanying drawings.

As shown in FIG. 2, an embodiment of this application provides a communication method 200 for a localized service. The method may be performed by a terminal. In other words, the method may be performed by software or hardware installed in the terminal. The method includes the following steps.

S202: The terminal receives a reject message, where the reject message is used to indicate that a request for the localized service is rejected.

Before S202, the method further includes: The terminal sends a first message. For example, the terminal may further send the first message to an access and mobility management function (Access and Mobility Management Function, AMF) or a session management function (Session Management Function, SMF), where the first message is used to request a localized service.

Optionally, the first message may include one of the following: an initial registration request message, a mobile registration update request message, a service request message, a protocol data unit (Protocol Data Unit, PDU) session establishment request message, or a PDU session modification request message.

Optionally, the first message may include at least one of the following:
1) an identifier of a selected network providing the localized service
2) a slice of the localized service; and
3) a data network name (Data Network Name, DNN) of the localized service.

Optionally, the reject message received by the terminal includes a cause value, and the cause value is used to indicate that a current network providing the localized service is not authorized, is forbidden, or is congested.

S204: The terminal performs non-public network selection; or the terminal starts a first back-off timer, where the terminal does not send the first message when the first back-off timer is running, and a value of the first back-off timer is determined based on a validity time of a network that provides the localized service.

Optionally, before the terminal performs the non-public network selection, the method further includes: The terminal enters a state DEREGISTERED.

Optionally, that the terminal performs non-public network selection includes at least one of the following.

1) The terminal selects a network that satisfies a validity condition and provides the localized service The validity condition may be determined based on network selection information (for example, SNPN selection information for normalized services in SNPN) provided by a home network to the terminal. The network selection information includes validity information (including time validity information), location assistance information, and the like. In this example, before performing the non-public network selection, the terminal may further enter the state DEREGISTERED.

2) The terminal selects an equivalent network of a current serving network, and the equivalent network may also provide the localized service, thereby helping the terminal use the localized service as soon as possible. The terminal may not enter the state DEREGISTERED when performing the network selection.

3) The terminal selects a network based on a redirection network list, where the reject message includes the redirection network list, and the redirection network list is used to indicate the terminal to select a specified network. In this example, before performing the non-public network selection, the terminal may further enter the state DEREGISTERED. In this example, the redirection network list may be carried or indicated by the reject message.

Optionally, when the terminal performs the non-public network selection, the method further includes: The terminal stores an identifier of a network providing the localized service (namely, a network sending the reject message) in a forbidden list, where the forbidden list is used to prevent the terminal from selecting the network. In this example, through the foregoing forbidden list, it can be avoided that the terminal selects an inappropriate network when the performing non-public network selection, for example, it can be avoided that the terminal selects a congested network, or it can be avoided that the terminal selects an unauthorized network.

Optionally, the reject message includes information for indicating a value of a second back-off timer. That the terminal performs non-public network selection includes: The terminal performs the non-public network selection when it is determined that the validity time of the network that currently provides the localized service is less than a duration of the second back-off timer. In this embodiment, after the terminal receives the reject message (the reject message carries the second back-off timer, and the network may not consider the validity time of the network providing the localized service when the second back-off timer is assigned), the terminal determines that the validity time of the network that currently provides the localized service is less than the duration of the second back-off timer, and the terminal enters the state DEREGISTERED and performs the non-public network selection. Optionally, the value of the second back-off timer (or referred to as the duration of the second back-off timer, otherwise similar) may be the same as or different from the value of the first back-off timer.

In embodiments of this application, the duration of the first back-off timer is determined based on the validity time of the network providing the localized service. For example, the duration of the first back-off timer is made as small as possible, and the duration of the first back-off timer is less than a duration of a back-off timer in the related technology. Specifically, a time at which the first back-off timer expires may still be within the foregoing validity time, so that the terminal may re-try to send the signaling request message to request the localized service after expiry of the first back-off timer, thereby helping the terminal normally use the localized service.

Optionally, the reject message includes information for indicating the value of the first back-off timer, and the first message includes at least one of the following:
1) a first information element, where the first information element is used to indicate a requested back-off timer value, and the back-off timer value is determined by the terminal based on the validity time of the network that provides the localized service; and
2) a second information element, where the second information element is used to indicate the validity time of the network that provides the localized service.

In this example, the terminal provides the first information element or the second information element to the network, so that the network considers the validity time of the localized service when the first back-off timer is allocated to the terminal, thereby helping the terminal normally use the localized service within the validity time.

Optionally, the value of the first back-off timer is determined based on at least one of the following: a back-off timer value requested by the terminal; a validity time of a network providing the localized service that is sent by the terminal; a validity time of a network providing the localized service that is locally configured in the terminal; subscription data of the terminal; and a network policy.

Optionally, the validity time is a one-time time or a periodic time.

Optionally, when the terminal starts the first back-off timer, the method further includes: The terminal retries, based on a re-attempt indication carried in the reject message, to send a signaling request message to request the localized service after expiry of the first back-off timer, so that the terminal normally uses the localized service.

According to the communication method for a localized service provided in embodiments of this application, when the request of the localized service is rejected, the terminal may perform the non-public network selection, to prevent the terminal from being incapable of initiating any NAS signaling request within a relatively long time to affect communication, thereby improving communication performance of the terminal. Alternatively, the terminal starts the first back-off timer. Because the duration of the first back-off timer (or referred to as the value of the first back-off timer) is determined based on the validity time of the network providing the localized service, it is avoided that the terminal cannot initiate any NAS signaling request within a relatively long time to affect communication, thereby improving communication performance of the terminal.

To describe the communication method for a localized service provided in embodiments of this application in detail, a description is provided below in combination with a plurality of specific embodiments.

### Embodiment I

In this embodiment, the AMF rejects the signaling request message sent by the UE due to the localized service, and assigns a cause value, and the UE may enter a state DEREGISTERED and perform non-public network selection. The foregoing signaling request message (corresponding to the first message in the foregoing embodiment) may be used for mobile registration, update registration, or service request registration. As shown in FIG. 3, this embodiment includes the following steps.

Step 0: The UE selects, through the first parameter, a network that is available and allowed to provide the localized service. The first parameter may be a network selection parameter for access to the localized service (network selection parameters for access for localized services), and the first parameter may be obtained from the home network or obtained through pre-configuration.

Step 1: The UE sends a signaling request message to the AMF, where the signaling request message is used to request the localized service. The signaling request message may include one of the following: an initial registration request message, a mobile registration update request message, a service request message, a PDU session establishment request message, or a PDU session modification request message.

The signaling request message includes at least one of the following pieces of information to indicate a request for the localized service:
1) an identifier of a selected network providing the localized service;
2) a slice of the localized service; and
3) a DNN of the localized service.

Step 2: The AMF receives the signaling request message of the localized service sent by the UE, and the AMF rejects the signaling request message.

The cause why the AMF rejects the UE signaling request message includes at least one of the following.
1) The AMF detects that the network providing the localized service is congested.
2) The network providing the localized service is not authorized.
3) The network providing the localized service is not allowed.

Step 3: The AMF sends the signaling reject message and including an appropriate cause value (cause value).

The cause value is used to indicate that a current network providing a localized service is unavailable, and the unavailable cause includes: being not authorized, forbidden, or congested.

The cause value may be a newly added cause value, for example, the SNPN is temporarily not authorized for access for the localized service in the SNPN; SNPN for access for the localized service in the SNPN is not allowed; or the SNPN is not allowed (Temporarily not authorized for this SNPN for access for localized services in SNPN; SNPN for access for localized services in SNPN is not allowed; SNPN is not allowed).

The cause value is an existing cause value, for example, # 22: congestion (congestion), or # 74: temporally not authorized for this SNPN (Temporarily not authorized for this SNPN).

Optionally, the AMF includes a redirection network list in the signaling reject message, and the redirection network list is used to indicate the UE to reselect a suitable specified network. For example, the signaling reject message includes a list of access for a localized service in SNPN to be used information element (IE) (List of for access for localized services in SNPN to be used IE).

Step 4: The UE receives the signaling reject message, where the signaling reject message includes the cause value, and the UE enters a state DEREGISTERED and performing non-public network selection.

Optionally, the UE may further store the reject message of the network providing the localized service into the forbidden list, to indicate that the UE is forbidden to use a service provided by a current network.

The forbidden list is a forbidden list maintained by the UE for the network providing the localized service, for example, "temporarily forbidden SNPN for access for localized services in SNPN" and "permanently forbidden SNPN for access for localized services in SNPN"; SNPN for access for a localized service in SNPN is not allowed; and SNPN is not allowed ("temporarily forbidden SNPNs for access for localized services in SNPN" and "permanently forbidden SNPNs for access for localized services in SNPN"/SNPN for access for localized services in SNPN is not allowed/SNPN is not allowed).

Optionally, the UE performs the non-public network selection based on at least one of the following manners.
1) The UE selects another available network providing the localized service that satisfies the validity condition. The SNPN that satisfies the validity condition is selected in priority order. Each SNPN which broadcasts the indication that access using credentials from a credentials holder is supported and which is identified by an SNPN identity contained in an entry of the "credentials holder controlled prioritized list of preferred SNPN for access for localized services in SNPN" (each SNPN which broadcasts the indication that access using credentials from a credentials holder is supported and which is identified by an SNPN identity contained in an entry of the "credentials holder controlled prioritized list of preferred SNPNs for access for localized services in SNPN" (in priority order), if the validity information of the entry is met).
2) The UE selects an equivalent network of a current serving network. In this case, the UE does not need to enter the state DEREGISTERED. The network selection process depends on an implementation of the UE.
3) The UE selects an appropriate network based on a redirection network list provided by the network. The network selection process depends on the implementation of the UE.

### Embodiment II

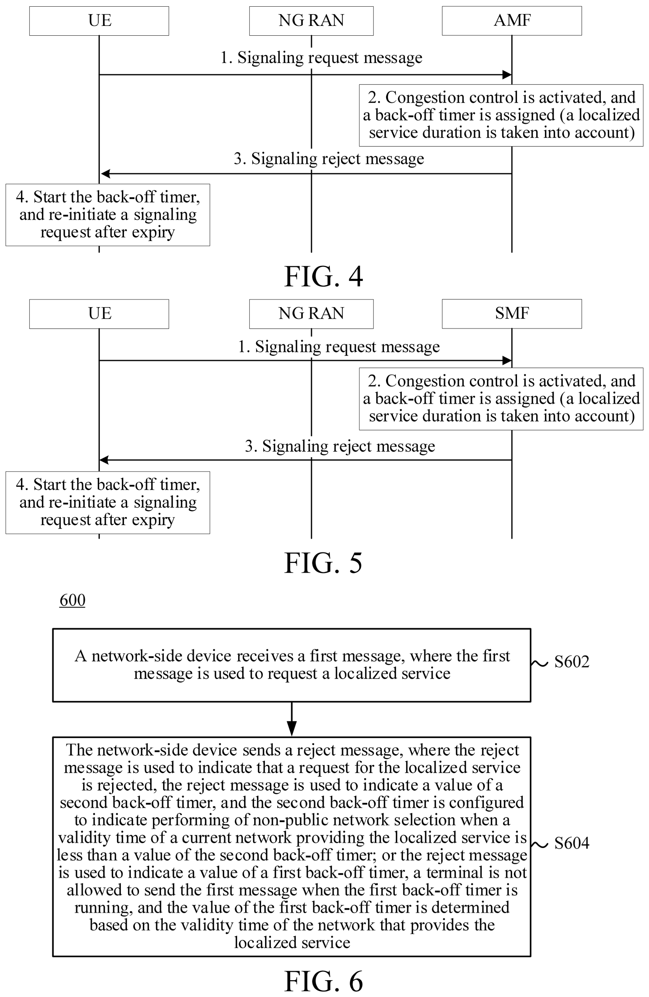

In this embodiment, if the AMF detects that the network providing the localized service is congested, congestion control is activated. A validity time of the network providing the localized service is considered when a T3346 timer is allocated. As shown in FIG. 4, this embodiment includes the following steps.

Step 0: The UE selects, through the first parameter (as described in Embodiment I ), a network that is available and allowed to provide a localized service.

Step 1: The UE sends a signaling request message (including a registration request or a service request) to the AMF, where the signaling request message is used to request the localized service.

The signaling request message includes at least one of the following pieces of information to indicate a request for the localized service:
1) an identifier of a selected network providing the localized service;
2) a slice of the localized service; and
3) a DNN of the localized service.

If the UE supports accessing a stand-alone non-public network (Stand-alone Non-Public Network, SNPN) that provides a localized service and an access function of the localized service in the SNPN is enabled, the UE carries an indication in the signaling request message, including at least one of the following implementations.
1) A requested T3346 information element (Requested T3346 IE) (corresponding to the first information element in the foregoing embodiment) is used to request a specific T3346 value. When requesting the T3346 value, the UE considers a validity time of a network providing a localized service.
2) A selected SNPN information element (Selected SNPN info IE) (corresponding to the second information element in the foregoing embodiment) is used to indicate the validity time of the network providing the localized service.

The validity time of the network providing the localized service may be a one-time time (for example, a one-shot) or a periodic time (for example, 2-4 pm per day).

For example, the foregoing Selected SNPN info IE code is shown in the following table.

| | | | | | | | | |
|---|---|---|---|---|---|---|---|---|
| Length of SNPN information (Length of SNPN info) | | | | | | | | octet p+6 |
| | | | | | | | | octet p+7 |
| 0 Idle Spare | 0 Spare | 0 Spare | 0 Spare | 0 Spare | 0 Spare | 0 Spare | Time Ind | octet p+8 |
| SNPN identifier (SNPN identity) | | | | | | | | octet (p+9)* |
| | | | | | | | | octet (p+17)* |
| | | | | | | | | octet (p+18)* |
| | | | | | | | Time validity information (Time validity information) | octet (s)* |

| | |
|---|---|
| Length of time validity information (Length of Time Validity Info) | octet (p+18)* |
| | octet (p+19)* |
| Validity start time 1 (Validity start time 1) | octet (p+20)* |
| | octet (p+24)* |
| Validity end time 1 (Validity end time 1) | octet (p+25)* |
| | octet (p+29)* |
| ... | octet (p+30)* |
| | octet (p+n*10+9)* |
| Validity start time n (Validity start time n) | octet (p+n* 10+10)* |
| | octet (p+n* 10+14)* |
| Validity end time n (Validity end time n) | octet (p+n* 10+15)* |
| | octet (p+n* 10+19)* |

Step 2: The AMF receives a signaling request message of a localized service sent by the UE. If the AMF detects that the network providing the localized service is congested, the AMF performs congestion control and determines a back-off timer (a back-off timer, which corresponds to the first back-off timer in the foregoing embodiment), and the back-off timer is configured to control a time for the UE to initiate a signaling request again due to the localized service.

When selecting the back-off timer value, the AMF should consider at least one of the following factors, so that the UE can send the signaling request message again to request the localized service after expiry of the back-off timer, and the UE does not miss a validity time window of the localized service.
1) A T3346 value requested by the UE.
2) A validity time of a network providing a localized service provided by the UE.

If the validity time is the one-time time, the AMF directly determines the validity time window of the localized service based on the one-time time. For example, if the validity time is a start time (start time) and an end time (end time), the validity time window is (end time minus start time).

If the validity time is the periodic time, the AMF considers only a validity time period closest to a current time, and determines the validity time window of the localized service. For example, the validity time is 2 to 4 pm and 6 to 8 pm per day, and the validity time window is 2 hours. The validity time is per Monday per week, and the validity time window is 24 hours.
3) The validity time of a network providing the localized service that is locally configured in the terminal.
4) Subscription data.
5) A network policy.

The back-off timer may be an existing timer, or may be a back-off timer newly added for the localized service.

Step 3: The AMF sends the signaling reject message and includes an appropriate cause value and the back-off timer.

The cause value is used to indicate congestion or insufficient resources of the network that currently provides the localized service. The cause value may be a newly added cause value, for example, # cause value: the SNPN is congested, and the SNPN is used for accessing for the localized service in the SNPN (congestion for this SNPN for access for localized services in SNPN). The cause value may be a cause value used in an existing reject message, for example, # 22: congestion.

Optionally, the AMF carries a re-attempt indication in the reject message, which is used to indicate that after expiry of the back-off timer, the UE is allowed to re-try to send the signaling request message to request the localized service. For example, a bit (bit) indication may be added in a re-attempt indication information element (Re-attempt indicator IE), as shown in bit3 in the following table.

| RATC (octet 3, bit 1) | |
|---|---|
| Bit | |
| **1** | |
| 0 | The UE is allowed to re-attempt the procedure in S1 mode (UE is allowed to re-attempt the procedure in S1 mode) |
| 1 | The UE is not allowed to re-attempt the procedure in S1 mode (UE is not allowed to re-attempt the procedure in S1 mode) |

| EPLMNC (octet 3, bit 2) | |
|---|---|
| Bit | |
| **2** | |
| 0 | The UE is allowed to re-attempt the procedure in an equivalent PLMN or equivalent SNPN (UE is allowed to re-attempt the procedure in an equivalent PLMN or equivalent SNPN) |
| 1 | The UE is not allowed to re-attempt the procedure in an equivalent PLMN or equivalent SNPN (UE is not allowed to re-attempt the procedure in an equivalent PLMN or equivalent SNPN) |

| SNPN-LSC (octet 3, bit 3) | |
|---|---|
| Bit | |
| **3** | |
| 0 | The UE is allowed to re-attempt the procedure in an SNPN providing access to localized service (UE is allowed to re-attempt the procedure in an SNPN providing access to localized service) |
| 1 | The UE is not allowed to re-attempt the procedure in an SNPN providing access to localized service (UE is not allowed to re-attempt the procedure in an SNPN providing access to localized service) |
| Bits 4 to 8 of octet 3 are spare and shall be encoded as zero (Bits 4 to 8 of octet 3 are spare and shall be encoded as zero). | |

Step 4: The UE receives the reject message and starting the back-off timer. When the back-off timer is running, the UE should not initiate a signaling request again for requesting the localized service. After expiry of the back-off timer, the UE may initiate the signaling request again for requesting the localized service.

### Embodiment III

In this embodiment, if the SMF detects that the network providing the localized service is congested, congestion control is activated. A validity time of the network providing the localized service is considered when the back-off timer (back-off timer) is allocated. As shown in FIG. 5, this embodiment includes the following steps.

Step 1: The UE sends a signaling request message (including a PDU session establishment request or a PDU session modification request) to the SMF, where the signaling request message is used to request a localized service.

The signaling request message includes at least one of the following pieces of information to indicate a request for the localized service:
1) a slice of the localized service; and
2) a DNN of the localized service.

If the UE supports accessing the SNPN that provides the localized service and the access function of the localized service in the SNPN is enabled, the UE carries a time information element in the signaling request message, including at least one of the following implementations.
1) A Requested T3396 IE, a Requested T3584 IE, or a Requested T3585 IE (corresponding to the first information element in the foregoing embodiment) is used to request a specific back-off timer value. When requesting the back-off timer value, the UE considers the validity time of the network providing the localized service
2) A Selected SNPN info IE (corresponding to the second information element in the foregoing embodiment) is used to indicate the validity time of the network providing the localized service.

The validity time of the network providing the localized service may be a one-time time (one-shot) or a periodic time (2-4 pm per day).

Step 2: The SMF receives the signaling request message of the localized service sent by the UE. If the SMF detects that the network providing the localized service is congested, the SMF performs congestion control and determines a back-off timer (which corresponds to the first back-off timer in the foregoing embodiment), and the back-off timer is configured to control a time for the UE to initiate the signaling request again.

When selecting the back-off timer value, the SMF should consider at least one of the following factors, so that the UE can send the signaling request message again to request the localized service after expiry of the back-off timer, and the UE does not miss a validity time window of the localized service.
1) A value of a back-off timer requested by the UE.
2) The validity time of a network providing a localized service provided by the UE.

If the validity time is the one-time time, the SMF directly determines the validity time window of the localized service based on the one-time time. For example, if the validity time is a start time: an end time, the validity time window is (end time minus start time).

If the validity time is the periodic time, the SMF considers only a validity time period closest to a current time, and determines the validity time window of the localized service. For example, the validity time is 2 to 4 pm and 6 to 8 pm per day, and the validity time window is 2 hours. The validity time is per Monday per week, and the validity time window is 24 hours.
3) The validity time of the network providing the localized service that is locally configured in the terminal.
4) Subscription data.
5) A network policy.

The timer may be an existing back-off timer, or may be a back-off timer newly added for the localized service.

Step 3: The SMF sends the signaling reject message and includes an appropriate cause value and the back-off timer.

The cause value is used to indicate congestion or insufficient resources of the network that currently provides the localized service.

The cause value may be a newly added cause value, for example, # cause value: insufficient resources for this SNPN for access for a localized service in SNPN (insufficient resources for this SNPN for access for localized services in SNPN).

The cause value may be a cause value used in an existing reject message, for example, # 26: insufficient resources (insufficient resources); # 67: insufficient resources for a specific slice and a DNN (insufficient resources for specific slice and DNN); and # 69: insufficient resources for a specific slice (insufficient resources for specific slice).

Optionally, the SMF carries a re-attempt indication in the reject message, which is used to indicate that after expiry of the back-off timer, the UE is allowed to re-try to send the signaling request message to request the localized service. Specifically, a bit (bit) indication may be added in a re-attempt indication information element (Re-attempt indicator IE), as shown in bit3 in the following table.

| RATC (octet 3, bit 1) | |
|---|---|
| Bit | |
| **1** | |
| 0 | The UE is allowed to re-attempt the procedure in S1 mode (UE is allowed to re-attempt the procedure in S1 mode) |
| 1 | The UE is not allowed to re-attempt the procedure in S1 mode (UE is not allowed to re-attempt the procedure in S1 mode) |

| EPLMNC (octet 3, bit 2) | |
|---|---|
| Bit | |
| | |

| **2** | |
|---|---|
| 0 | The UE is allowed to re-attempt the procedure in an equivalent PLMN or equivalent SNPN (UE is allowed to re-attempt the procedure in an equivalent PLMN or equivalent SNPN) |
| 1 | The UE is not allowed to re-attempt the procedure in an equivalent PLMN or equivalent SNPN (UE is not allowed to re-attempt the procedure in an equivalent PLMN or equivalent SNPN) |

| SNPN-LSC (octet 3, bit 3) | |
|---|---|
| Bit | |
| **3** | |
| 0 | The UE is allowed to re-attempt the procedure in an SNPN providing access to localized service (UE is allowed to re-attempt the procedure in an SNPN providing access to localized service) |
| 1 | The UE is not allowed to re-attempt the procedure in an SNPN providing access to localized service (UE is not allowed to re-attempt the procedure in an SNPN providing access to localized service) |
| Bits 4 to 8 of octet 3 are spare and shall be encoded as zero (Bits 4 to 8 of octet 3 are spare and shall be encoded as zero). | |

Step 4: The UE receives the reject message and starting the back-off timer. When the back-off timer is running, the UE should not initiate a signaling request again for requesting the localized service. After expiry of the back-off timer, the UE may initiate the signaling request again for requesting the localized service.

The communication method for a localized service according to embodiments of this application is described in detail above with reference to FIG. 2 to FIG. 5. The communication method for a localized service according to another embodiment of this application is described in detail below with reference to FIG. 6. It may be understood that interaction between a network-side device and a terminal described on the network-side device is the same as or corresponds to that described on the terminal side in the method shown in FIG. 2. To avoid repetition, relevant descriptions are properly omitted.

FIG. 6 is a schematic flowchart of implementation of a communication method for a localized service according to an embodiment of this application. The method may be applied to a network-side device. As shown in FIG. 6, the method 600 includes the following steps.

S602: A network-side device receives a first message, where the first message is used to request a localized service.

S604: The network-side device sends a reject message, where the reject message is used to indicate that a request for the localized service is rejected, the reject message is used to indicate a value of a second back-off timer, and the second back-off timer is configured to indicate performing of non-public network selection when a validity time of a current network providing the localized service is less than a value of the second back-off timer; or the reject message is used to indicate a value of a first back-off timer, a terminal is not allowed to send the first message when the first back-off timer is running, and the value of the first back-off timer is determined based on the validity time of the network that provides the localized service.

According to the communication method for a localized service provided in embodiments of this application, in a case that the request of the localized service is rejected, the network-side device may indicate the terminal to perform the non-public network selection when the validity time of the network that currently provides the localized service is less than the value of the second back-off timer, to prevent the terminal from being incapable of initiating any NAS signaling request within a relatively long time to affect communication, thereby improving communication performance of the terminal. Alternatively, the terminal is indicated to start the first back-off timer. Because the duration of the first back-off timer is determined based on the validity time of the network providing the localized service, it is avoided that the terminal cannot initiate any NAS signaling request within a relatively long time to affect communication, thereby improving communication performance of the terminal.

Optionally, in an embodiment, the reject message includes a redirection network list, and the redirection network list is used to indicate the terminal to select a specified network.

Optionally, in an embodiment, the method further includes: The network-side device determines a duration of the first back-off timer based on at least one of the following:
1) a back-off timer value requested by the terminal;
2) a validity time of a network providing the localized service that is sent by the terminal;
3) a validity time of a network providing the localized service that is locally configured in the terminal;
4) subscription data of the terminal; and
5) a network policy.

Optionally, in an embodiment, that the network-side device sends a reject message includes: The network-side device sends the reject message when at least one of the following is satisfied:
1) a network providing the localized service is congested;
2) the network providing the localized service is not authorized; and
3) the network providing the localized service is unavailable.

Optionally, in an embodiment, the reject message includes a cause value, and the cause value is used to indicate that a current network providing the localized service is not authorized, is forbidden, or is congested.

Optionally, in an embodiment, the reject message includes a re-attempt indication, and the re-attempt indication is used to indicate the terminal to re-try to send a signaling request message to request the localized service after expiry of the first back-off timer.

An execution body of the communication method for a localized service provided by embodiments of this application may be a communication apparatus for a localized service. In embodiments of this application, the communication apparatus for a localized service provided in embodiments of this application is described by using an example in which the communication apparatus for a localized service performs the communication method for a localized service.

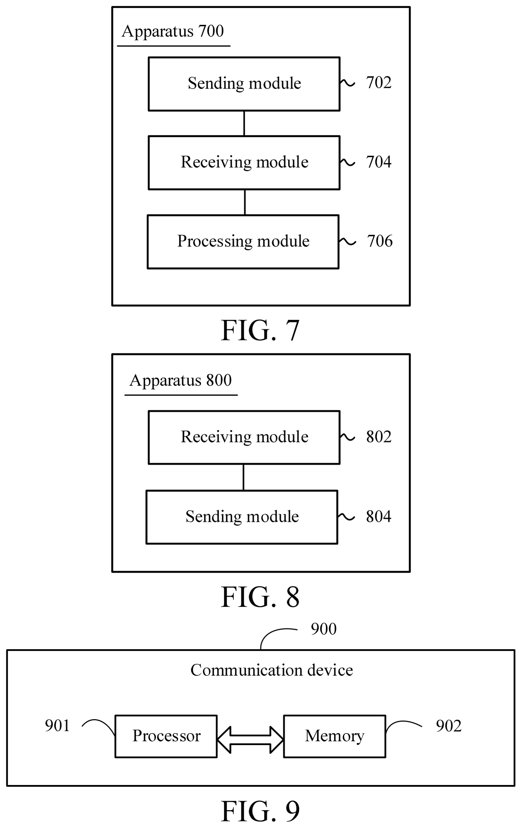

FIG. 7 is a schematic structural diagram of a communication apparatus for a localized service according to an embodiment of this application. The apparatus may correspond to a terminal in another embodiment. As shown in FIG. 7, the apparatus 700 includes the following modules:
a sending module 702, configured to send a first message, where the first message is used to request a localized service;
a receiving module 704, configured to receive a reject message, where the reject message is used to indicate that a request for the localized service is rejected; and
a processing module 706, configured to perform non-public network selection, or start a first back-off timer, where the apparatus does not send the first message when the first back-off timer is running, and a value of the first back-off timer is determined based on a validity time of a network that provides the localized service.

According to the communication apparatus for a localized service provided in embodiments of this application, when the request of the localized service is rejected, the non-public network selection may be performed, so that communication is prevented from being affected because any NAS signaling request cannot be initiated within a relatively long time, thereby improving the communication performance. Alternatively, the first back-off timer is started. Because the value of the first back-off timer is determined based on the validity time of the network providing the localized service, communication is prevented from being affected because any NAS signaling request cannot be initiated within a relatively long time, thereby improving the communication performance.

Optionally, in an embodiment, the processing module 706 is configured to perform at least one of the following:
1) selecting a network that satisfies a validity condition and is able to provide the localized service, where the validity condition is determined based on network selection information provided by a home network to the apparatus;
2) selecting an equivalent network of a current serving network, where the apparatus does not enter a state DEREGISTERED when performing network selection; and
3) selecting a network based on a redirection network list, where the reject message includes the redirection network list, and the redirection network list is used to indicate the apparatus to select a specified network.

Optionally, in an embodiment, the apparatus is further configured to enter the state DEREGISTERED before performing the non-public network selection.

Optionally, in an embodiment, when the processing module performs the non-public network selection, the processing module 706 is further configured to store, in a forbidden list, an identifier of a network that sends the reject message, where the forbidden list is used to prevent the apparatus from selecting the network.

Optionally, in an embodiment, the reject message includes information for indicating a value of a second back-off timer, and the processing module 706 is configured to perform the non-public network selection when it is determined that the validity time of the network that currently provides the localized service is less than a duration of the second back-off timer.

Optionally, in an embodiment, the reject message includes information for indicating the value of the first back-off timer, and the first message includes at least one of the following:
1) a first information element, where the first information element is used to indicate a requested back-off timer value, and the back-off timer value is determined by the apparatus based on the validity time of the network that provides the localized service; and
2) a second information element, where the second information element is used to indicate the validity time of the network that provides the localized service.

Optionally, in an embodiment, the value of the first back-off timer is determined based on at least one of the following: a back-off timer value requested by the apparatus; a validity time of a network providing the localized service that is sent by the apparatus; a validity time of a network providing the localized service that is locally configured in the terminal; subscription data of the apparatus; and a network policy.

Optionally, in an embodiment, the validity time is a one-time time or a periodic time.

Optionally, in an embodiment, when the processing module 706 starts the first back-off timer, the apparatus further includes a sending module, configured to re-try, based on a re-attempt indication carried in the reject message, to send a signaling request message to request the localized service after expiry of the first back-off timer.

Optionally, in an embodiment, the reject message includes a cause value, and the cause value is used to indicate that a current network providing the localized service is not authorized, is forbidden, or is congested.

Optionally, in an embodiment, the first message includes one of the following: an initial registration request message, a mobile registration update request message, a service request message, a PDU session establishment request message, and a PDU session modification request message.

Optionally, in an embodiment, the first message includes at least one of the following:
1) an identifier of a selected network providing the localized service;
2) a slice of the localized service; and
3) a DNN of the localized service.

For the apparatus 700 according to this embodiment of this application, reference may be made to the process of the corresponding method 200 in embodiments of this application. In addition, the units/modules of the apparatus 700 and the foregoing other operations and/or functions are respectively intended to implement the corresponding process of the method 200, and achieve the same or equivalent technical effect. For brevity, details are not described herein again.

The communication apparatus for a localized service in embodiments of this application may be an electronic device, for example, an electronic device having an operating system, or a component in an electronic device, such as an integrated circuit or a chip. The electronic device may be a terminal, or may be another device other than the terminal. For example, the terminal may include but is not limited to the foregoing listed types of the terminal 11. The another device may be a server, a network attached storage (Network Attached Storage, NAS), or the like, which is not specifically limited in embodiments of this application.

FIG. 8 is a schematic structural diagram of a communication apparatus for a localized service according to an embodiment of this application. The apparatus may correspond to a network-side device in another embodiment. As shown in FIG. 8, the apparatus 800 includes the following modules:
a receiving module 802, configured to receive a first message, where the first message is used to request a localized service; and
a sending module 804, configured to send a reject message, where the reject message is used to indicate that a request for the localized service is rejected; and the reject message is used to indicate a value of a second back-off timer, and the second back-off timer is configured to indicate performing of non-public network selection when a validity time of a current network providing the localized service is less than a value of the second back-off timer; or the reject message is used to indicate a value of a first back-off timer, a terminal is not allowed to send the first message when the first back-off timer is running, and the value of the first back-off timer is determined based on a validity time of a network that provides the localized service.

Optionally, the apparatus 800 further includes a processing module, and the like.

In the communication apparatus for a localized service provided in embodiments of this application, when the signaling request of the localized service is rejected, the terminal may be indicated to perform the non-public network selection when the validity time of the network that currently provides the localized service is less than the duration of the second back-off timer, to prevent the terminal from being incapable of initiating any NAS signaling request within a relatively long time to affect communication, thereby improving communication performance of the terminal. Alternatively, the terminal is indicated to start the first back-off timer. Because the duration of the first back-off timer is determined based on the validity time of the network providing the localized service, it is avoided that the terminal cannot initiate any NAS signaling request within a relatively long time to affect communication, thereby improving communication performance of the terminal.

Optionally, in an embodiment, the reject message includes a redirection network list, and the redirection network list is used to indicate the terminal to select a specified network.

Optionally, in an embodiment, the apparatus further includes a processing module, configured to determine a duration of the first back-off timer based on at least one of the following:
1) a back-off timer value requested by the terminal;
2) a validity time of a network providing the localized service that is sent by the terminal;
3) a validity time of a network providing the localized service that is locally configured in the terminal;
4) subscription data of the terminal; and
5) a network policy.

Optionally, in an embodiment, the sending module 804 is configured to send the reject message when at least one of the following is satisfied:
1) a network providing the localized service is congested;
2) the network providing the localized service is not authorized; and
3) the network providing the localized service is unavailable.

Optionally, in an embodiment, the reject message includes a cause value, and the cause value is used to indicate that a current network providing the localized service is not authorized, is forbidden, or is congested.

Optionally, in an embodiment, the reject message includes a re-attempt indication, and the re-attempt indication is used to indicate the terminal to re-try to send a signaling request message to request the localized service after expiry of the first back-off timer.

For the apparatus 800 according to this embodiment of this application, reference may be made to the process of the corresponding method 600 in embodiments of this application. In addition, the units/modules of the apparatus 800 and the foregoing other operations and/or functions are respectively intended to implement the corresponding process of the method 600, and achieve the same or equivalent technical effect. For brevity, details are not described herein again.

The communication apparatus for a localized service provided in embodiments of this application can implement all processes implemented in the method embodiments of FIG. 2 to FIG. 6, and achieve the same technical effects. To avoid repetition, details are not described herein again.

Optionally, as shown in FIG. 9, an embodiment of this application further provides a communication device 900, including a processor 901 and a memory 902. The memory 902 stores a program or an instruction executable in the processor 901. For example, when the communication device 900 is a terminal, the program or the instruction, when executed by the processor 901, implements the steps in the foregoing embodiments of the communication method for a localized service, and can achieve the same technical effect. When the communication device 900 is a network-side device, the program or the instruction, when executed by the processor 901, implements the steps of the foregoing embodiment of the communication method for a localized service, and can achieve the same technical effect. To avoid repetition, details are not described herein again.

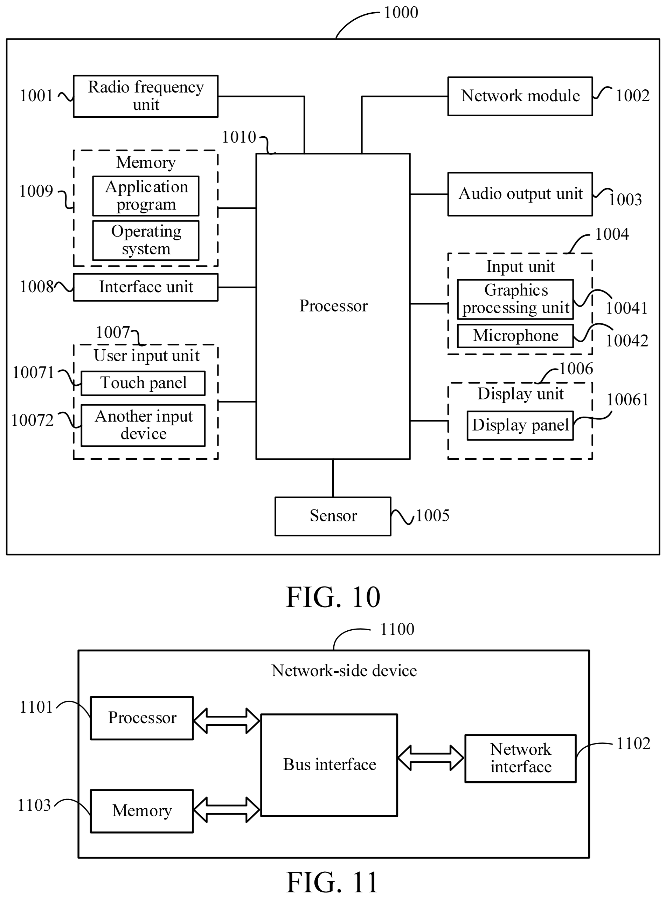

An embodiment of this application further provides a terminal, including a processor and a communication interface. The communication interface is configured to: send a first message, where the first message is used to request a localized service; and receive a reject message, where the reject message is used to indicate that a request for the localized service is rejected. The processor is configured to perform non-public network selection; or start a first back-off timer, where the apparatus does not send the first message when the first back-off timer is running, and a value of the first back-off timer is determined based on a validity time of a network that provides the localized service. The terminal embodiment corresponds to the foregoing method embodiment of the terminal side. The implementation processes and implementations of the foregoing method embodiment are all applicable to the terminal embodiment, and can achieve the same technical effects. Specifically, FIG. 10 is a schematic diagram of a hardware structure of a terminal for implementing an embodiment of this application.

The terminal 1000 includes, but is not limited to, at least some components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) that supplies power to the components. The power supply may be logically connected to the processor 1010 through a power management system, thereby implementing functions such as management of charging, discharging, and power consumption through the power management system. The terminal structure shown in FIG. 10 constitutes no limitation on the terminal, and the terminal may include more or fewer components than those shown in the figure, or some merged components, or different component arrangements. Details are not described herein again.

It should be noted that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061. The display panel 10061 may be configured in a form such as a liquid crystal display or an organic light-emitting diode. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a function button (for example, a volume control button or a power button), a trackball, a mouse, and a joystick. Details are not described herein again.

In this embodiment of this application, the radio frequency unit 1001 receives downlink data from a network-side device and may provide the downlink data to the processor 1010 for processing. In addition, the radio frequency unit 1001 may send uplink data to the network-side device. Generally, the radio frequency unit 1001 includes, but is not limited to, an antenna, an amplifier, a transceiver, a coupler, a low noise amplifier, a duplexer, and the like.

The memory 1009 may be configured to store a software program or an instruction and various data. The memory 1009 may include mainly a first storage area for storing a program or instructions and a second storage area for storing data. The first storage area may store an operating system, an application program or an instruction required for at least one function (for example, a sound playback function and an image playback function), and the like. In addition, the memory 1009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes, but is not limited to, these memories and any other suitable types of memories.

The processor 1010 may include one or more processing units. Optionally, the processor 1010 integrates an application processor and a modem processor. The application processor mainly processes operations related to an operating system, a user interface, an application program, and the like. The modem processor mainly processes wireless communication signals, and is, for example, a baseband processor. It may be understood that the foregoing modem processor may alternatively not be integrated into the processor 1010.

The radio frequency unit 1001 may be configured to: send a first message, where the first message is used to request a localized service; and receive a reject message, where the reject message is used to indicate that a request for the localized service is rejected. The processor 1010 may be configured to perform non-public network selection, or start a first back-off timer, where the terminal does not send the first message when the first back-off timer is running, and a value of the first back-off timer is determined based on a validity time of a network that provides the localized service.

According to the terminal provided in embodiments of this application, when the request of the localized service is rejected, the terminal may perform the non-public network selection, to prevent the terminal from being incapable of initiating any NAS signaling request within a relatively long time to affect communication, thereby improving communication performance of the terminal. Alternatively, the terminal starts the first back-off timer. Because the duration of the first back-off timer is determined based on the validity time of the network providing the localized service, it is avoided that the terminal cannot initiate any NAS signaling request within a relatively long time to affect communication, thereby improving communication performance of the terminal.

It may be understood that for the implementation process of each implementation in this embodiment, reference may be made to the relevant description of the communication for a localized service in the method embodiment, and the same or corresponding technical effect is achieved. To avoid repetition, details are not described herein again.

An embodiment of this application further provides a network-side device, including a processor and a communication interface. The communication interface is configured to receive a first message, where the first message is used to request a localized service; and send a reject message, where the reject message is used to indicate that the request of the localized service is rejected, and the reject message is used to indicate a value of a second back-off timer. The second back-off timer is configured to indicate performing of non-public network selection when a validity time of a current network providing the localized service is less than a value of the second back-off timer; or the reject message is used to indicate a value of a first back-off timer, a terminal is not allowed to send the first message when the first back-off timer is running, and the value of the first back-off timer is determined based on a validity time of a network that provides the localized service. The embodiment of the network-side device corresponds to the foregoing method embodiment of the network-side device. Each implementation process and implementation of the foregoing method embodiment can be applied to the embodiment of the network-side device, and can achieve the same technical effects.

An embodiment of this application further provides a network-side device. As shown in FIG. 11, a network-side device 1100 includes a processor 1101, a network interface 1102, and a memory 1103. The network interface 1102 is, for example, a common public radio interface (common public radio interface, CPRI).

Specifically, the network-side device 1100 in embodiments of the present invention further includes an instruction or a program stored in the memory 1103 and executable on the processor 1101. The processor 1101 invokes the instruction or the program in the memory 1103 to perform the method performed by each module shown in FIG. 8, and achieves the same technical effect. To avoid repetition, details are not described herein again.

An embodiment of this application further provides a readable storage medium. The readable storage medium stores a program or an instruction. The program or the instruction, when executed by a processor, implements the processes of the foregoing embodiments of the communication method for a localized service, and can achieve the same technical effect. To avoid repetition, details are not described herein again.

The processor is a processor of the terminal in the foregoing embodiments. The readable storage medium may be non-volatile or non-transient. The readable storage medium includes a computer-readable storage medium, for example, a computer read-only memory ROM, a random access memory RAM, a magnetic disk, an optical disc, or the like. In some examples, the readable storage medium may be a non-transitory readable storage medium.

An embodiment of this application further provides a chip. The chip includes a processor and a communication interface. The communication interface is coupled to the processor. The processor is configured to run a program or an instruction to implement the processes of the foregoing embodiments of the communication method for a localized service, and can achieve the same technical effects. To avoid repetition, details are not described herein again.

It should be understood that, the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the foregoing embodiments of the communication method for a localized service, and can achieve the same technical effect. To avoid repetition, details are not described herein again.

An embodiment of this application further provides a communication system for a localized service, including a terminal and a network-side device. The terminal may be configured to perform the steps of the foregoing communication method for a localized service. The network-side device may be configured to perform the steps of the foregoing communication method for a localized service.

It should be noted that in this specification, terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by the phrase "include one □□" does not exclude existence of an additional same element in the process, the method, the article, or the apparatus that includes the element. In addition, it should be noted that the scope of the method and the apparatus in the implementations of this application is not limited to function execution in the order shown or discussed, and may further include function execution in a substantially simultaneous manner or in a reverse order based on the involved functions. For example, the described method may be performed in an order different from the described order, and various steps may also be added, omitted, or combined. In addition, features described with reference to some examples may be combined in another example.

According to the descriptions of the foregoing implementations, a person skilled in the art may clearly learn that the method in the foregoing embodiments may be implemented by a computer software product with a necessary universal hardware platform, or may be implemented by hardware. The computer software product is stored in a storage medium (for example, a ROM, a RAM, a magnetic disk, or an optical disc) and includes several instructions, to enable the terminal or the network-side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection of this application.

## Claims

1. A communication method for a localized service, including:
sending, by a terminal, a first message, wherein the first message is used to request a localized service;
receiving, by the terminal, a reject message, wherein the reject message is used to indicate that a request for the localized service is rejected; and
performing, by the terminal, non-public network selection, or starting, by the terminal, a first back-off timer, wherein the terminal does not send the first message when the first back-off timer is running, and a value of the first back-off timer is determined based on a validity time of a network that provides the localized service.

2. The method according to claim 1, wherein the performing, by the terminal, non-public network selection includes at least one of the following:
selecting, by the terminal, a network that satisfies a validity condition and is able to provide the localized service, wherein the validity condition is determined based on network selection information provided by a home network to the terminal;
selecting, by the terminal, an equivalent network of a current serving network, wherein the terminal does not enter a state DEREGISTERED when performing network selection; and
selecting, by the terminal, a network based on a redirection network list, wherein the reject message includes the redirection network list, and the redirection network list is used to indicate the terminal to select a specified network.

3. The method according to claim 1, wherein before the performing, by the terminal, non-public network selection, the method further includes:
entering, by the terminal, a state DEREGISTERED.

4. The method according to any one of claims 1 to 3, wherein when the terminal performs the non-public network selection, the method further includes:
storing, in a forbidden list by the terminal, an identifier of a network that sends the reject message, wherein the forbidden list is used to prevent the terminal from selecting the network.

5. The method according to any one of claims 1 to 3, wherein
the reject message includes information for indicating a value of a second back-off timer; and
the performing, by the terminal, non-public network selection includes:
performing, by the terminal, the non-public network selection when it is determined that the validity time of the network that currently provides the localized service is less than a duration of the second back-off timer.

6. The method according to claim 1, wherein the reject message includes information for indicating the value of the first back-off timer, and the first message includes at least one of the following:
a first information element, wherein the first information element is used to indicate a requested back-off timer value, and the back-off timer value is determined by the terminal based on the validity time of the network that provides the localized service; and
a second information element, wherein the second information element is used to indicate the validity time of the network that provides the localized service.

7. The method according to claim 6, wherein the value of the first back-off timer is determined based on at least one of the following:
a back-off timer value requested by the terminal;
a validity time of a network providing the localized service that is sent by the terminal;
a validity time of a network providing the localized service that is locally configured in the terminal;
subscription data of the terminal; and
a network policy.

8. The method according to claim 6, wherein
the validity time is a one-time time or a periodic time.

9. The method according to claim 1, 6, or 8, wherein when the terminal starts the first back-off timer, the method further includes:
retrying, by the terminal based on a re-attempt indication carried in the reject message, to send a signaling request message to request the localized service after the first expiry of back-off timer.

10. The method according to any one of claims 1 to 9, wherein the reject message includes a cause value, and the cause value is used to indicate that a current network providing the localized service is not authorized, is forbidden, or is congested.

11. A communication method for a localized service, including:
receiving, by a network-side device, a first message, wherein the first message is used to request a localized service; and
sending, by the network-side device, a reject message, wherein the reject message is used to indicate that a request for the localized service is rejected;
the reject message is used to indicate a value of a second back-off timer, and the second back-off timer is configured to indicate performing of non-public network selection when a validity time of a current network providing the localized service is less than a value of the second back-off timer; or
the reject message is used to indicate a value of a first back-off timer, a terminal is not allowed to send the first message when the first back-off timer is running, and the value of the first back-off timer is determined based on a validity time of a network that provides the localized service.

12. The method according to claim 11, wherein the reject message includes a redirection network list, and the redirection network list is used to indicate the terminal to select a specified network.

13. The method according to claim 11, further including: determining, by the network-side device, a duration of the first back-off timer based on at least one of the following:
a back-off timer value requested by the terminal;
a validity time of a network providing the localized service that is sent by the terminal;
a validity time of a network providing the localized service that is locally configured in the terminal;
subscription data of the terminal; and
a network policy.

14. The method according to claim 11 or 13, wherein the sending, by the network-side device, a reject message includes: sending, by the network-side device, the reject message when at least one of the following is satisfied:
a network providing the localized service is congested;
the network providing the localized service is not authorized; and
the network providing the localized service is unavailable.

15. The method according to any one of claims 11 to 14, wherein the reject message includes a cause value, and the cause value is used to indicate that a current network providing the localized service is not authorized, is forbidden, or is congested.

16. The method according to any one of claims 11 and 13 to 15, wherein the reject message includes a re-attempt indication, and the re-attempt indication is used to indicate the terminal to retry to send a signaling request message to request the localized service after expiry of the first back-off timer.

17. A communication apparatus for a localized service, including:
a sending module, configured to send a first message, wherein the first message is used to request a localized service;
a receiving module, configured to receive a reject message, wherein the reject message is used to indicate that a request for the localized service is rejected; and
a processing module, configured to perform non-public network selection, or start a first back-off timer, wherein the apparatus does not send the first message when the first back-off timer is running, and a value of the first back-off timer is determined based on a validity time of a network that provides the localized service.

18. The apparatus according to claim 17, wherein the processing module is configured to perform at least one of the following:
selecting a network that satisfies a validity condition and is able to provide the localized service, wherein the validity condition is determined based on network selection information provided by a home network to the apparatus;
selecting an equivalent network of a current serving network, wherein the apparatus does not enter a state DEREGISTERED when performing network selection; and
selecting a network based on a redirection network list, wherein the reject message includes the redirection network list, and the redirection network list is used to indicate the apparatus to select a specified network.

19. The apparatus according to claim 17, wherein the apparatus is further configured to enter the state DEREGISTERED before performing the non-public network selection.

20. The apparatus according to any one of claims 17 to 19, wherein when the processing module performs the non-public network selection, the processing module is further configured to:
store, in a forbidden list, an identifier of a network that sends the reject message, wherein the forbidden list is used to prevent the apparatus from selecting the network.

21. The apparatus according to any one of claims 17 to 19, wherein the reject message includes information for indicating a value of a second back-off timer, and the processing module is configured to:
perform the non-public network selection when it is determined that the validity time of the network that currently provides the localized service is less than a duration of the second back-off timer.

22. The apparatus according to claim 17, wherein the reject message includes information for indicating the value of the first back-off timer, and the first message includes at least one of the following:
a first information element, wherein the first information element is used to indicate a requested back-off timer value, and the back-off timer value is determined by the apparatus based on the validity time of the network that provides the localized service; and
a second information element, wherein the second information element is used to indicate the validity time of the network that provides the localized service.

23. The apparatus according to claim 22, wherein the value of the first back-off timer is determined based on at least one of the following:
a back-off timer value requested by the apparatus;
a validity time of a network providing the localized service that is sent by the apparatus;
a validity time of a network providing the localized service that is locally configured in the terminal;
subscription data of the apparatus; and
a network policy.

24. The apparatus according to claim 22, wherein
the validity time is a one-time time or a periodic time.

25. The apparatus according to claim 17, 22, or 24, wherein when the processing module starts the first back-off timer, the apparatus further includes a sending module, configured to:
retry, based on a re-attempt indication carried in the reject message, to send a signaling request message to request the localized service after expiry of the first back-off timer.

26. The apparatus according to any one of claims 17 to 25, wherein the reject message includes a cause value, and the cause value is used to indicate that a current network providing the localized service is not authorized, is forbidden, or is congested.

27. A communication apparatus for a localized service, including:
a receiving module, configured to receive a first message, wherein the first message is used to request a localized service; and
a sending module, configured to send a reject message, wherein the reject message is used to indicate that a request for the localized service is rejected; and
the reject message is used to indicate a value of a second back-off timer, and the second back-off timer is configured to indicate performing of non-public network selection when a validity time of a current network providing the localized service is less than a value of the second back-off timer; or
the reject message is used to indicate a value of a first back-off timer, a terminal is not allowed to send the first message when the first back-off timer is running, and the value of the first back-off timer is determined based on a validity time of a network that provides the localized service.

28. The apparatus according to claim 27, wherein the reject message includes a redirection network list, and the redirection network list is used to indicate the terminal to select a specified network.

29. The apparatus according to claim 27, further including a processing module, configured to determine a duration of the first back-off timer based on at least one of the following:
a back-off timer value requested by the terminal;
a validity time of a network providing the localized service that is sent by the terminal;
a validity time of a network providing the localized service that is locally configured in the terminal;
subscription data of the terminal; and
a network policy.

30. The apparatus according to claim 27 or 29, wherein the sending module is configured to send the reject message when at least one of the following is satisfied:
a network providing the localized service is congested;
the network providing the localized service is not authorized; and
the network providing the localized service is unavailable.

31. The apparatus according to any one of claims 27 to 30, wherein the reject message includes a cause value, and the cause value is used to indicate that a current network providing the localized service is not authorized, is forbidden, or is congested.

32. The apparatus according to any one of claims 27 and 29 to 31, wherein the reject message includes a re-attempt indication, and the re-attempt indication is used to indicate the terminal to re-try to send a signaling request message to request the localized service after expiry of the first back-off timer.

33. A terminal, including a processor and a memory, wherein the memory stores a program or an instruction executable on the processor, and the program or the instruction, when executed by the processor, implements the steps of the method according to any one of claims 1 to 10.

34. A network-side device, including a processor and a memory, wherein the memory stores a program or an instruction executable in the processor, and the program or the instruction, when executed by the processor, implements the steps of the method according to any one of claims 11 to 16.

35. A readable storage medium, storing a program or an instruction, wherein the program or the instruction, when executed by a processor, implements the steps of the method according to any one of claims 1 to 16.

36. A chip, including a processor and a communication interface, wherein the communication interface is coupled to the processor, and the processor is configured to run a program or an instruction to implement the steps of the communication method for a localized service according to any one of claims 1 to 16.

37. A computer program product, stored in a non-transient storage medium, wherein the computer program product is executed by at least one processor to implement the communication method for a localized service according to any one of claims 1 to 16.
